Europäisches Patentamt

European Patent Office

Office européen des brevets

(11) Publication number: **0 352 239**
A2

# EUROPEAN PATENT APPLICATION

(21) Application number: **89830332.6**

(51) Int. Cl.5: **G 03 B 21/54**

(22) Date of filing: **17.07.89**

(30) Priority: **18.07.88 IT 2140288**

(43) Date of publication of application:
**24.01.90 Bulletin 90/04**

(84) Designated Contracting States: **ES**

(71) Applicant: **Dentella, Alessandro**
**Via Palestrina 20**
**I-20052 Monza (Mi)  (IT)**

(72) Inventor: **Dentella, Alessandro**
**Via Palestrina 20**
**I-20052 Monza (Mi)  (IT)**

(54) Automatic slide loader into the linear or round type magazines for slide projectors.

(57) Distributing device to quickly and automatically load the slides into the proper magazine, be it of linear or round model for the projector; essentially comprising a sled housing where to load the batch of slides, designed with a sliding back wall that is made to push the slides toward the outlet edge whence the slides fall one after the other into the bins of the underlying magazine. In this device the progressing of the back wall is matched to the relative sliding travel of the sled along the magazine so as to achieve a set ratio between the instantaneus speed of the two movements.

**Description**

## AUTOMATIC SLIDE LOADER INTO THE LINEAR OR ROUND TYPE MAGAZINES FOR SLIDE PROJECTORS

Object of the present invention is a distributing device to quickly and automatically load the slides into the proper projector magazine. The device has been designed in two versions: one for linear magazines generally fitting up to 50 slides, and a second one for round magazines generally fitting 80 to 100 slides.

The working principle is common to the two versions.

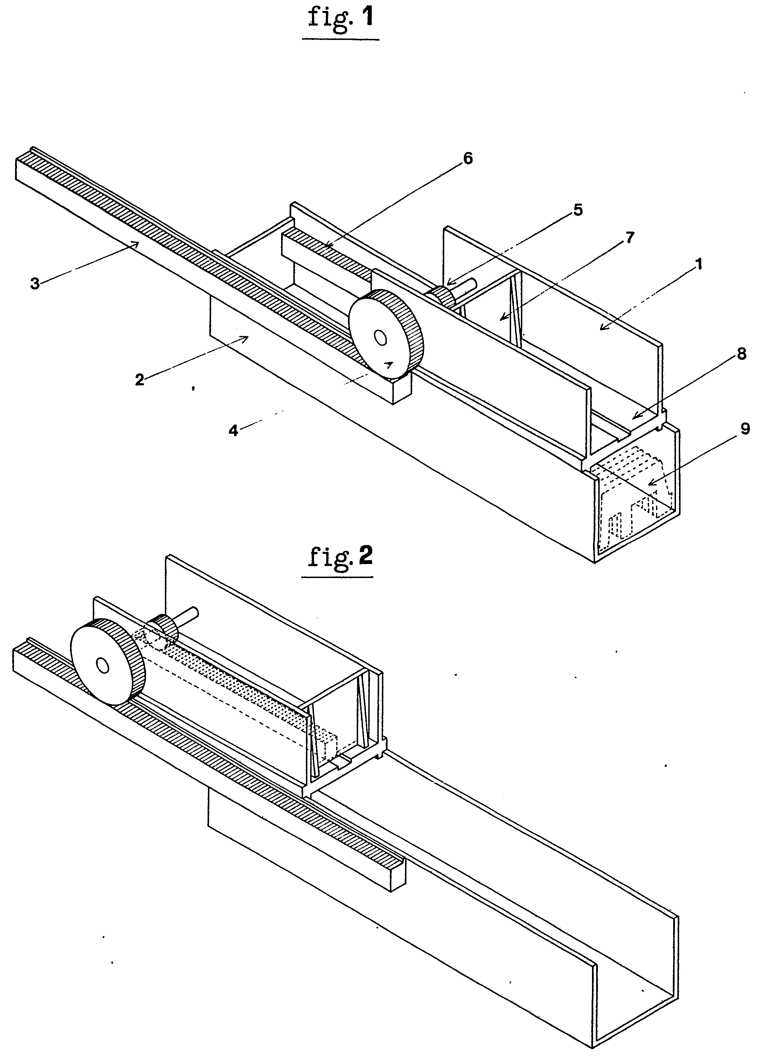

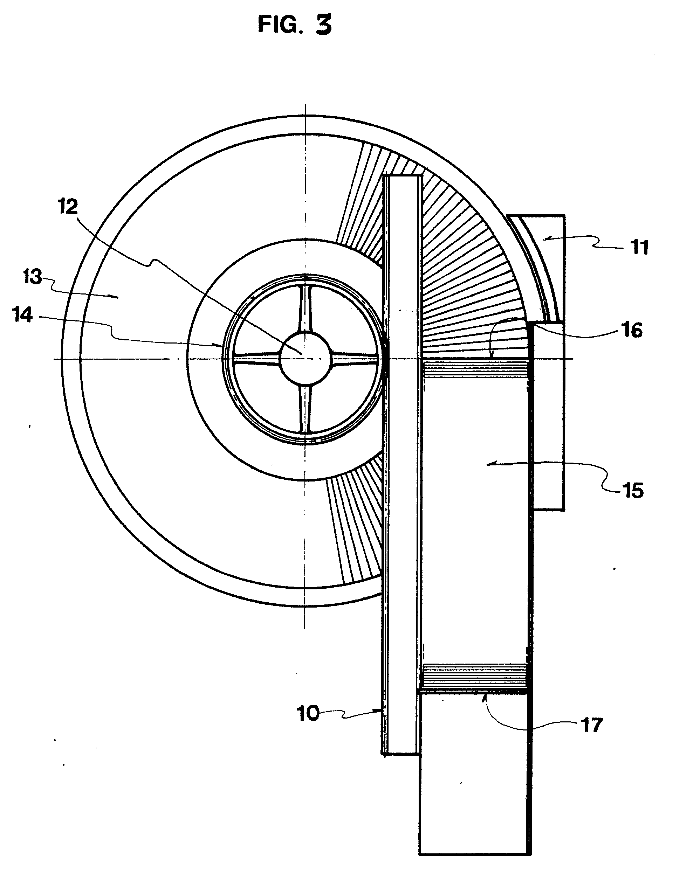

The batch of slides is accomodated in a housing located right above the magazine. The batch of slides gets pushed by a moving back wall towards the open end of the housing: from here the slides fall by gravity one at a time into the individual bins of the underlying magazine. To make this happen automatically, the fall of each single slide must be tightly syncronized with the progressing of the slide sled along the magazine, so that the falling position of each slide matches exactly the next empty bin of the underlying magazine. Since the thickness of the slides is much smaller than the pitch between magazine bins (empty width + thickness of wall between bins), than the rate of motion of the batch of slides towards the open end must be proportionally slower than the rate of travel of the sled along the magazine. The correlation between the two movements can be achieved by a proper reduction mechanism. It can also be achieved by providing a little actuating motor for each of the two movements, and by controlling the speed of the two motors in the proper ratio. We now describe the device in its essential components, with reference to the drawings of figg.1 and 2 for the linear loaders version, and to fig.3 for the round loaders.

## LINEAR LOADER VERSION

The device comprises:
- The straight base support 2, onto which a rack 3 is fastened. This straight base during the loading operation is parallel to the magazine 9 tightly housed in it.
-The travelling housing of the batch of slides 1 referred to as "sled" comprises two vertical sides 1 and 2, and a base flat surface 8 onto which the batch of slides rests. It also comprises a back moving wall 7 connected to a rack element 6, which works by pushing forward the batch of slides towards the open end of the housing. The back wall 7 is actually slightly tilted backwards, with respect to a vertical plane, to prevent the batch of slides from tipping towards the open end.

Obviously, as soon as the forward most slide trespasses the edge of bottom 8 (chute edge) it must fall down and it must find the next empty bin of the magazine exactly underneath. The travelling sled is laterally guided by the straight supporting base 2, and is made to travel along it;
- The transmission reduction mechanism to connect and coordinate the travel of the sled along the base 2 with the advancment of the back wall 7 consists of a gear 4 engaged on the rack 3 and connected through a small shaft to the pinion 5, which in turn engages rack 6.

Evidently, the travel of the back wall 7 besides being opposite in direction to the travel of the sled, will proceed at a properly reduced speed.

In fact, the total travel of this back wall corresponds to the total thickness of the batch of slides, which is sharply less than the corresponding lenght of the housing magazine; practically, it may be 1/3 to a 1/4. Therefore, the ratio of gears 4 and 5 shall be according to such ratio.

## FUNCTIONING OF THE DEVICE

As mentioned above, the empty magazine is place along the straight base 2, and held in mutual fixed position. In fig.1 and 2 the magazine is represented by the dotted lines. The moving sled is positioned to the end of the magazine, as shown in fig.1. The batch of slides is located in the housing onto plane 8.

Now, by shifting the sled towards left in the fig.1 all the way to the back side of the magazine, one shall afford, through the above mentioned racks and gears mechanism, a coordinate travel in opposite direction of back wall 7, which shall hence push the batch of slides towards the open end of the housing. As mentioned above, a travel of the sled equal to the pitch of one magazine bin (including the wall thickness between bins) mast correspond to a back wall travel equal to the thickness of one slide, and consequently to the trespassing of the chute edge of flat 8 by one slide, which by gravity shall fall into the underlying magazine.

It is evident that when starting from a correct mutual position, all slides shall match in their falling as many bins of the magazine.

In the functioning of the device according to the invention, the sled travel with respect to support 2 and to the connected magazine is to be meant in relative sense: in fact, the device can obviously work also be keeping the sled in a fixed position, and sliding the base 2 along with the magazine.

## ROUND VERSION MODEL

The device comprises the following essential components here described referring to fig.3:
- The base 11 provided with shaft 12, around which the round magazine 13 rotates; shaft 12 also carries a gear 14, rotating along with the magazine. The circumpherential travel of the gear corresponds to the maximum length of the batch of slides.
- The housing 15 for the batch of slides is set about the magazine, and works in a fixed position to the base part 11. This housing is open to one end where it terminates into a chute edge 16.

The other extreme of the housing is fenced by the moving wall 17 which to work moves towards the chute edge 16.
- Rack 10, which couples with gear 14 is firmly connected to wall 17.

## WORKING OF THE DEVICE

The batch of slides is located in the housing 15, and one prepares the operation by setting the device so that:

- The chute-edge 16 matches the first empty bin of the underlying magazine.
- The batch of slides be in contact with the moving wall 17 on the one end, and with the edge-chute 16 on the opposite end, with one slide ready to be pushed out.
- Rack 10 be engaged with gear 14.

Now, by turning magazine 13 and wheel 14 firmly connected to it, rack 10 shall result to advance in a straight motion. The ratio between the angular speed of the magazine, as well as of moving well 17 connected to said magazine shall thus be determined by the primitive diameter of gear 14.

Thanks to this coordination between the two motions in a set ratio, each slide shall be pushed passed the chute-edge 16 exactly when the next empty bin of the magazine is passing under the same chute-edge; and so on, for all slides.

The above described way of working holds also in case the number of slides is less than the number of empty bins in the magazine. In any way it is based upon the precise ratio between the total angular pitch of the bin (including the thickness of the wall between bins), and the thickness of the slide.

When this ratio changes, so must the diameter of gear 14.

For both versions of the loader one can actuate it manually, or by electric power; specifically for the round version it may be preferable to drive by electric motor, either directly driving the assembly of magazine 13 and gear 14, or by driving directly rack 10, which shall in turn drive 14 and 13.

In the case of a round magazine, the coordination between rotation of magazine 13 and travel of the moving wall 17 in a proper ratio can also be obtained by providing two separate actuating electric motors, and by controlling speeds in the proper ratio.

## Claims

1 - Distributing device to quickly and automatically load slides into the wanted magazine, be it of linear or of round model, for a photographic projector, essentially comprising:
- A housing for the batch of slides provided with a moving back wall pushing the slides towards the open end of the housing whence the slides fall by gravity one at a time into the respective empty bins of the magazine.
- Elements to support and or guide said housing (or "sled") so as to achieve a relative motion of the sled with respect to the magazine or viceversa, in a predetermined relative course and positioning.
- Means to insure coordination between travel of the housing relative to the magazine, and advancement of the moving wall, so that a slide be pushed passed the chute-edge at the open end of the housing every time a empty bin of the magazine is brought under said chute-edge.

2 - Device according to claim 1 in which the coordination between relative motions, of housing magazine and back wall, is obtained through coupling reduction between gears and racks.

3 - Device under claim 1 in which the coordination between relative motions, of housing magazine and back wall, is obtained through two separate actuating motors, with speed controlled in the proper ratio.

4 - Device designed as per claim 1, for round magazine in which the housing for the batch of slide is connected to a suitable base part, and is placed above the magazine, while the letter rotates underneath, during loading cycle.

5 - System as per claim 1, bottom of housing horizontal and with back wall slightly tilted with respect to the supporting guides, to prevent slides from accidentally tipping forward (toward the open end).

6 - System as per claim 1, allowing the use to choose the gear ratio to suit the thickness of the slides in the batch;
to this purpose, the driven shaft, bears more than one pinion, only one of them at a time is made to work with its matching rack pushing the moving wall: so, by changing rack, one can change ratio.

7 - Device as per claim 1, designed for straight magazine where the supporting base for the housing sled is a box, capable of holding the straight magazine, and fit to be used, once projection of slide is finished, to unload them into the box itself so as to regroup them tightly into a batch; such unloading to be afforded by quickly turning the magazine upside down into the box.

8 - System as per claim 7 where the magazine be slightly cocked sideways during loading, so as to widen the usable width of capture of slide falling from the sled.

## fig. 1

## fig. 2

FIG. 3